# EUROPEAN PATENT SPECIFICATION

(11) **EP 4 177 140 B1**
(45) Date of publication and mention of the grant of the patent: **28.08.2024**
(21) Application number: 21206227.7
(22) Date of filing: 03.11.2021
(51) Int. Cl.: B62D 55/21, B62D 55/28

(54) **TRACK LINK ASSEMBLY**
GLEISGLIEDANORDNUNG
ENSEMBLE LIAISON DE PISTE

(43) Date of publication of application: 10.05.2023
(73) Proprietor: Berco S.p.A., 44034 Copparo FE (IT); thyssenkrupp AG, 45143 Essen (DE)
(72) Inventor: Grenzi, Francesco, 44121 Ferrara (IT); Maggiolini, Enrico, 44123 Ferrara (IT)
(74) Representative: thyssenkrupp Intellectual Property GmbH

(56) References cited:
- WO-A1-2016/099796
- FR-A1- 2 320 220
- US-A1- 2016 052 572
- US-A1- 2017 314 983
- US-A1- 2018 281 880

## Description

The invention refers to a track link assembly according to the preamble of claim 1.

Such a track link assembly is known, for example, from WO 2020/208179 A1. In this known track link assembly, the sensor element can be arranged in a recess in the form of a bore located in the track link body (see for example Fig. 8 of WO 2020/208179 A1).

WO 2016/099796 A1 discloses a wear sensing device (42). The wear sensing device may have a wear sensor (66). The wear sensor may have plurality of wear members (74), a communication device (72), and a processing device (68). The processing device may be configured to generate a signal indicative of wear, based on a state of the plurality of wear members. The processing device may be further configured to transmit the signal with the communication device. The wear sensing device may further have a housing (56). The housing may at least partially enclose the wear sensor and include a plurality of separate slots (76). The plurality of wear members may be positioned in the plurality of separate slots.

WO 2016/099796 A1 further discloses that, in some embodiments, the housing may include a first section 58 and a second section 60. The first section 58 may include the surface 56, while the second section 60 may be positioned at an opposite end from the surface 56. In an exemplary embodiment, the first section 58 may be formed from a material that wears at substantially the same rate as the track link 26 (e.g., the same material), so that the surfaces 52 and 56 wear at the same rate. In addition, the material may be selected to protect the components of the sensing device 42 held therein. For example, the first section 58 may be made from the same metal material from which link body 50 is made.

The second section 60, on the other hand, may be formed from a material that promotes efficient wireless communication by the sensing device 42. For example, the second section 60 may be formed from a polymer material (e.g., plastic) that is substantially transparent to wireless signals. In this way, the sensing device 42 may wirelessly communicate with the controller 44 in a reliable manner. That is, the housing 54 may protect the sensing components of the sensing device 42, while not inhibiting wireless communication. In some embodiments, the second section 60 may include a cap configured to cover an end of the first section 58.

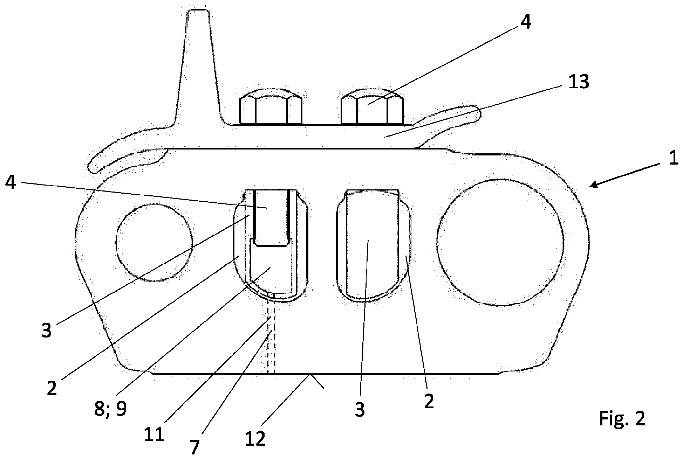

In an exemplary embodiment, the second section 60 may be positioned in a location that allows for reliable communication with the controller 44. As shown in Fig. 2, the track link 26 may include a pair of link windows 62, which may be configured to receive ends of mechanical fasteners (e.g. bolts) inserted through bores 64 that connect the track link 26 to another component (e.g. a track shoe 38). The link windows 62 allow a nut to be placed on an end of the mechanical fasteners, securing the connection.

In one specific embodiment described in WO 2016/099796 A1, the second section 60 may be positioned in one of the link windows 62, thereby being exposed for communication with the controller 44. In this specific embodiment, the link window 62 receives both the nut for securing the connection between the track link and the track shoe 38, as well as the second section 60 of the housing 54. The second section 60 may therefore be directly exposed to the very harsh operating conditions in which track chain vehicles such as construction equipment, excavators and the like are operated. This can damage the second section 60, which is made of polymer material, and cause the entire sensor assembly to fail.

It is an object of the present invention to suggest an improved track link assembly with a sensor arrangement which is less vulnerable to damage and failure. At the same time, the production costs for the improved track link assembly should be substantially the same as for the track link assembly known from the prior art.

This object is solved by a track link assembly according to independent claim 1. Advantageous further embodiments of the track link assembly according to the invention are given in the dependent claims.

The invention is based on the idea that the existing nut of the track link assembly can fulfill an additional function and be used to provide a protected housing for the electronic elements required for operating the sensor arrangement. The electronic elements arranged in the receiving space are housed safely and protected from the harsh operating conditions under which the track chain vehicle operates. The electronic elements cannot be damaged mechanically (for example by stones, earth or other hard materials).

Therefore, in track link assemblies improved according to the invention, the sensor arrangements fail significantly less frequently. Overall, this enables significantly improved and more reliable operation of the sensor arrangement, e.g. an improved and more reliable wear monitoring of the track link assembly.

According to one embodiment of the present invention, the internal receiving space in arranged coaxially with the internally threaded section. This arrangement allows to make use of the height of the window opening for receiving both the internal threaded section of the nut and the receiving space for the electronic elements. The overall dimensions and the design of existing track link assemblies need not be changed. Thereby it is possible to easily retrofit track link assemblies which do not have a wear monitoring system with a wear monitoring system with improved reliability and reduced failure frequency.

According to one embodiment of the present invention the track link body has a recess which extends from the window opening in the direction of a surface of the track link body, the sensor element is arranged in the recess, and the internal receiving space is located in a section of the nut adjacent to the recess. In this way, the electronic elements for operating the sensor arrangement are disposed immediately adjacent to the sensor elements and the signals sensed by the sensor elements can be processed without any loss in signal intensity. This ensures a reliable operation of the sensor arrangement.

Within the scope of the present invention, different types of sensor arrangements can be used. According to one embodiment of the present invention the sensor arrangement is configured for measuring a physical or thermal property indicative of the wear of the track link assembly. In this way a reliable wear monitoring of the track link can be ensured, predictive maintenance is enabled and cost intensive failure of track chain vehicles like construction machinery during operation can be avoided.

The present invention is described in more detail with the help of the figures. The figures show schematically:
Fig. 1 a track link assembly according to the present invention with two nuts accommodating electronic elements for operating the sensor arrangement,
Fig. 2 a side view of the track link assembly shown in Fig. 1,
Fig. 3 an enlarged sectional view of a nut accommodating electronic elements for operating the sensor arrangement,
Fig. 4 a track link assembly according to the present invention in a side view indicating the location of the sensor elements of the sensor arrangements.

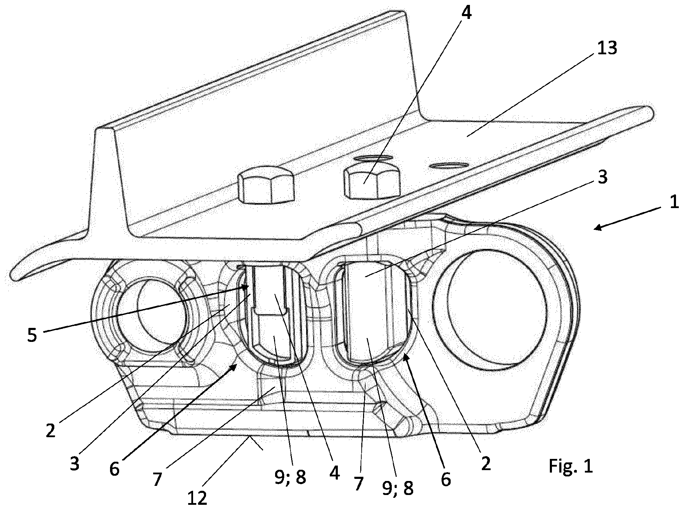

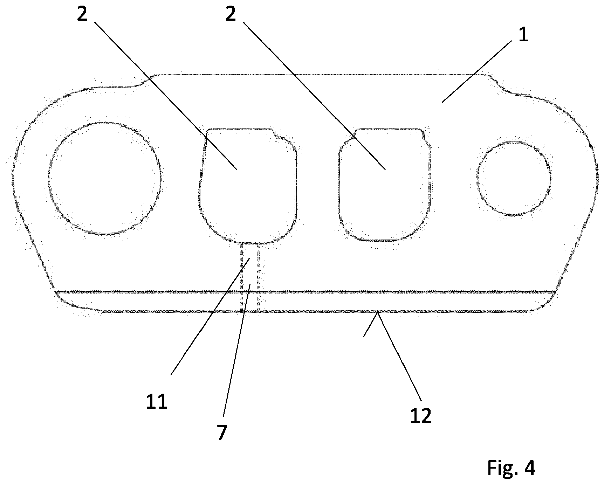

Fig. 1 shows a track link assembly according to the present invention in a perspective view. The track link body 1 has a surface 12 on one side. On the side opposite to the surface 12 there are two screws 4 for attaching a shoe 13 to the track link body 1. Each screw 4 is screwed into a nut 3. The nuts 3 are arranged in window openings 2 of the track link body 1. The sensor arrangement 6 with the sensor elements 7 is not visible in Fig. 1 as it is arranged in a recess 11 (see Fig. 2 and 4) inside the track link body 1.

The electronic elements 8 for operating the sensor arrangement 6 are positioned inside the nut 3 in a receiving space 9. The receiving space 9 can be a bore hole or any other kind of cavity created in the body of the nut 3.

In the embodiment shown in Fig. 1 there are two sensor arrangements 6, each having at least one sensor element 7 which is arranged inside a recess 11 (see Fig. 2 and 4) not visible in Fig. 1. In other embodiments of the present invention there can be only one sensor arrangement 6 or there can be more than two sensor arrangements 6 provided in the track link assembly.

Fig. 2 shows a side view of the track link assembly shown in Fig. 1. The track link body 1 has a recess 11 located adjacent the window opening 2 shown (by way of example only) on the left hand side of the track link body 1. Sensor elements 7 are arranged inside the recess 11. The electronic elements 8 for operating the sensor arrangement 6 are arranged inside a receiving space 9 in the nut 3.

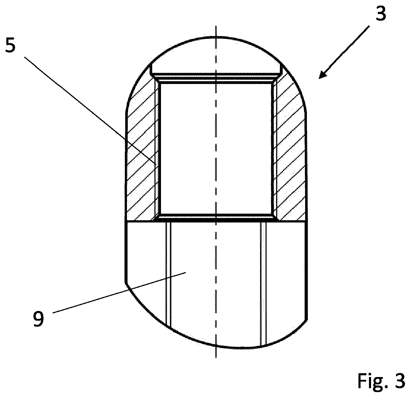

Fig. 3 shows a detailed sectional view of the nut 3. The nut 3 has an internally threaded section 5 for receiving the threaded bolt part of the screw 4 (see Fig. 1 and 2). Coaxially aligned with the threaded section 5 is the receiving space 9 for housing the electronic elements 8 for operating the sensor arrangement 6. In the embodiment shown in Fig. 3 the receiving space 9 is manufactured as a bore coaxially aligned with a threaded bore providing the threaded section 5 of the nut 3.

Fig. 4 shows a track link body 1 according to the present invention. The track link bogy 1 has two window openings 2. A recess 11 is provided for receiving sensor elements 7 of the sensor arrangement 6 (the sensor arrangement 6 is not shown in Fig. 4). The recess 11 stretches from the window opening 2 located on the left handside of the track link to a surface 12 of the track link body 1. The sensor elements 7 sense for example data indicative of the wear of the surface 12 of the track link body 1. Electronic elements 8 (not shown in Fig. 4) are needed of operating the sensor arrangement 6, this means for example for detecting and processing the sensor data and for sending the data on to other units for further processing and evaluating the data. By arranging the electronic elements 8 in a receiving space 9 inside the nut 3 (not shown in Fig. 4), and by locating the internal receiving space 9 in a section of the nut 3 adjacent to the recess 11, the distance between the sensor elements 7 and the electronic elements 8 is minimized. Therefore, the sensor data can be reliably processed by the electronic elements.

The connection for transmitting the sensor data from the sensor elements 7 to the electronic elements 8 can be a cable connection or a wireless connection.

The wear sensor may be for example a resistive sensor, a pressure sensor or a magnetic sensor.

The sensor signal can be read or received by a microprocessor through a specific conditioning of the signal. The same microprocessor (or a different one) can be used for the transmission of the data by NFC (or Bluetooth, lora, RFID) to an external tool (like e.g. a smartphone/tablet) or to a receiver inside the track chain vehicle.

The present invention provides a very robust and reliable solution for providing a sensor arrangement 6 for a track link of a track chain vehicle. The solution provided by the invention can easily be retrofitted to existing track link assemblies which do not have a wear monitoring system, because the recess 11 can easily be integrated into an existing track link, and at the same time it is very easy to use a nut 3 of the present invention for fastening the track shoe to the track link body 1, the nut 3 being equipped with the electronic elements 8 arranged inside the receiving space 9. The protected arrangement of the sensor elements 7 in the recess 11 inside the track link body 1 and of the electronic elements 8 in the receiving space 9 inside the nut 3 allows for maximum protection of the sensor arrangement 6 against damages, resulting in improved and reliable operation of the sensor arrangement 6 with minimized failure probability and failure frequency.

### Reference signs list

- 1: track link body
- 2: window opening
- 3: nut
- 4: screw
- 5: threaded section
- 6: sensor arrangement
- 7: sensor element
- 8: electronic elements
- 9: receiving space
- 11: recess
- 12: surface

## Claims

1. A track link assembly comprising
a track link body (1) with at least one window opening (2) for receiving a nut (3),
a track shoe attached to the track link body (1) by means of at least one screw (4), the nut (3) comprising an internally threaded section (5) for receiving the screw (4), a sensor arrangement (6) comprising a sensor element (7) attached to the track link body (1) and electronic elements (8) for operating the sensor arrangement (6),
**characterized in that**
the nut (3) has an internal receiving space (9) in which the electronic elements (8) for operating the sensor arrangement (6) are arranged.

2. Track link assembly according to claim 1,
**characterized in that**
the internal receiving space (9) in arranged coaxially with the internally threaded section (5).

3. Track link assembly according to claim 1 or 2,
**characterized in that**
the track link body (1) has a recess (11) which extends from the window opening (2) in the direction of a surface (12) of the track link body (1), the sensor element (7) is arranged in the recess (11), and the internal receiving space (9) is located in a section of the nut (3) adjacent to the recess (11).

4. Track link assembly according to one of the proceeding claims,
**characterized in that**
the sensor arrangement (6) is configured for measuring a physical or thermal property indicative of the wear of the track link assembly.

## Patentansprüche

1. Kettengliedanordnung mit
einem Kettengliedkörper (1) mit mindestens einer Fensteröffnung (2) zur Aufnahme einer Mutter (3),
einem Gleisschuh, der mittels mindestens einer Schraube (4) an dem Kettengliedkörper (1) befestigt ist,
wobei die Mutter (3) einen Innengewindeabschnitt (5) zur Aufnahme der Schraube (4) aufweist,
einer Sensoranordnung (6), die ein am Kettengliedkörper (1) befestigtes Sensorelement (7) und elektronische Elemente (8) zum Betrieb der Sensoranordnung (6) umfasst,
**dadurch gekennzeichnet, dass**
die Mutter (3) einen inneren Aufnahmeraum (9) aufweist, in dem die elektronischen Elemente (8) zur Betätigung der Sensoranordnung (6) angeordnet sind.

2. Kettengliedanordnung nach Anspruch 1,
**dadurch gekennzeichnet, dass**
der Innenaufnahmeraum (9) koaxial zu dem Innengewindeabschnitt (5) angeordnet ist.

3. Kettengliedanordnung nach Anspruch 1 oder 2,
**dadurch gekennzeichnet, dass**
der Kettengliedkörper (1) eine Ausnehmung (11) aufweist, die sich von der Fensteröffnung (2) in Richtung einer Fläche (12) des Kettengliedkörpers (1) erstreckt, das Sensorelement (7) in der Ausnehmung (11) angeordnet ist und der innere Aufnahmeraum (9) in einem an die Ausnehmung (11) angrenzenden Abschnitt der Mutter (3) liegt.

4. Kettengliedanordnung nach einem der vorangehenden Ansprüche,
**dadurch gekennzeichnet, dass**
die Sensoranordnung (6) zur Messung einer physikalischen oder thermischen Eigenschaft ausgebildet ist, die den Verschleiß der Raupenlenkeranordnung anzeigt.

## Revendications

1. Assemblage de la chaine de chenille comprenant
un corps de chenille (1) avec au moins une ouverture de fenêtre (2) pour recevoir un écrou (3),
un patin de chenille fixé au corps de chenille (1) au moyen d'au moins une vis (4), l'écrou (3) comprend une section filetée intérieurement (5) pour recevoir la vis (4), un dispositif de capteur (6) comprenant un élément de capteur (7) fixé au corps de la chenille (1) et des éléments électroniques (8) pour faire fonctionner le dispositif de capteur (6),
**caractérisé en ce que**
l'écrou (3) possède un espace de réception interne (9) dans lequel sont disposés les éléments électroniques (8) permettant d'actionner le dispositif de capteur (6).

2. Assemblage de la chaine de chenille selon la revendication 1,
**caractérisé en ce que**
l'espace de réception interne (9) est disposé coaxialement avec la section filetée interne (5).

3. Assemblage de la chaine de chenille selon la revendication 1 ou 2,
**caractérisé en ce que**
le corps de chenille (1) présente un renfoncement (11) qui s'étend depuis l'ouverture de la fenêtre (2) en direction d'une surface (12) du corps de chenille (1), l'élément capteur (7) est disposé dans le renfoncement (11), et l'espace de réception interne (9) est situé dans une section de l'écrou (3) adjacente au renfoncement (11).

4. Assemblage de la chaine de chenille selon l'une des revendications précédentes, **caractérisé en ce que**
le dispositif de capteur (6) est configuré pour mesurer une propriété physique ou thermique indicative de l'usure de l'ensemble de liaison de voie.
